# EUROPÄISCHE PATENTSCHRIFT

(11) **EP 2 818 346 B1**
(45) Veröffentlichungstag und Bekanntmachung des Hinweises auf die Patenterteilung: **09.12.2020**
(21) Anmeldenummer: 14002161.9
(22) Anmeldetag: 24.06.2014
(51) Int. Cl.: B60H 1/00, B60H 1/32, F25B 39/04, F25D 11/00, F25B 1/00

(54) **Kühlmittelverflüssiger-Einheit für Kühlguttransporte**
Coolant liquefier unit for the transport of chilled goods
Unité de liquéfaction d'agent refroidissant pour le transport de marchandises frigorifiques

(30) Priorität: 24.06.2013 DE 202013005644 U
(43) Veröffentlichungstag der Anmeldung: 31.12.2014
(73) Patentinhaber: Dometic Sweden AB, 171 54 Solna (SE)
(72) Erfinder: Esch, Franz-Josef, 48477 Hörstel (DE)
(74) Vertreter: Grosse Schumacher Knauer von Hirschhausen

(56) Entgegenhaltungen:
- EP-A1- 0 958 952
- US-A- 3 759 321
- US-A- 3 943 728
- US-A- 4 321 803

## Beschreibung

### GEBIET DER ERFINDUNG

Die Erfindung betrifft eine Kühlmittelverflüssiger-Einheit für Kühlguttransporte mit den Merkmalen des Oberbegriffs von Anspruch 1. Demnach stellt die Kühlmittelverflüssiger-Einheit einen gehäusegeschützten Bestandteil einer fahrzeugintegrierten Kühl- oder Klimatisierungsvorrichtung, insbesondere für Kühlguttransporter dar. Die Kühlmittelverdampfung findet an einer von der Kühlmittelverflüssiger-Einheit gesonderten Stelle im Fahrzeug statt. Der Kühlmittelkreislauf ist also zwischen der Verflüssiger-Einheit und der Verdampfer-Einheit gesplittet. Mindestens eine, an einem Geräteträger angeordnete Komponente der Kühleinrichtung und insbesondere des Kühlmittelkreislaufes, wie ein Kühlmittel-Kompressor, ist, bevorzugt in horizontaler Ausrichtung vorgesehen und kann z.B: elektrisch angetrieben werden. Eine Anordnung in horizontaler Lage bedeutet, dass die Komponente, wie zumindest ein Trockner, ein Steuerungsteil, ein Kompressorteil oder dergl. und ggf. auch ein elektrischer Antriebsmotor bevorzugt liegend (im Gegensatz zu stehend) angeordnet sind. Die beiden letzteren können auch als integrierte Baueinheit vorliegen oder sie können als zwei mechanisch einander zugeordnete aber getrennte Baueinheiten vorliegen. Liegend betreibbare und elektrisch angetriebene KühlmittelKompressoren sind am Markt erhältlich und mithin als solche bekannt. An dem Geräteträger ist ferner ein als Kühlmittelkondensator (Kondensator) dienender luftgekühlter quer durchströmbarer Wärmeaustauscher angeordnet. Der Kompressor und der Kondensator sind durch die erforderlichen Verbindungsleitungen für flüssiges und/oder dampfförmiges Kühlmittel eines Kühlmittelkreislaufs verbunden. Ferner sind Anschlussverbinder zu zumindest einem gesondert angeordneten Kühlmittelverdampfer des Kühlmittelkreislaufs vorgesehen. Ein Kühlluftgebläse sorgt für eine Querdurchströmung des Wärmeaustauschers mit Luft, um die Kondensationswärme des komprimierten Kühlmittels an die Atmosphäre abzuführen. Dabei bedeutet "Querdurchströmung", dass der Wärmetauscher mit Kühlrippen oder Ähnlichem versehen ist, insbesondere mit Zwischenräumen, die ein wirkungsvolles Umströmen der kältemittelführenden Wärmeaustauscherrohre oder -kanäle gestattet. Der Wärmeaustauscher ist also quer zu seiner Erstreckungsrichtung oder -fläche mit Luft durchströmbar, also nicht flächig geschlossen - wie aber allgemein bekannt.

### TECHNOLOGISCHER HINTERGRUND

Fahrzeuge, die als Kühlgutkleintransporter dienen, wie sie als Frischdiensttransporter, Arzneimitteltransporter und dergleichen dienen, sind für den Lieferdienst an die Kunden konzipiert und entsprechend kompakt gebaut, sowie zwecks besserer Arbeitsbedingungen für den Fahrer in der Regel mit einer klimatisierten Fahrgastzelle werksseitig (oder durch Nachrüstung) ausgestattet. Diese Klimaanlagen eigenen sich nur bedingt oder überhaupt nicht für die Einbindung in die Kühlanlage für das im Transportraum auf Solltemperatur zu temperierende oder zu haltende Transportgut.

Es ist daher üblich, solche Kühlguttransporter mit einer gesonderten zweiten Verdichtereinheit auszustatten, die im Motorraum installiert und über den Fahrzeugrotor angetrieben wird, so wie das auch schon beim Kompressor für die Kühlanlage der Fahrgastzelle der Fall ist.

Ferner sind Lösungen bekannt, bei denen Kühlguttransporter auch einen Kühlbetrieb des Transportgutes bei stehendem Fahrzeug gestatten. Dazu ist es bekannt, einen elektrisch betriebenen Kühlmittelverdichter zu installieren, der z.B. über eine fahrzeugexterne 230V oder 400V Spannungsversorgung betreibbar ist.

Aus der DE 298 16 787 U1 ist eine Verdampfungskühlanordnung für Frischdienst-Fahrzeuge mit kombinierter Fahr- und Standkühlung bekannt, der mit einem vom Fahrzeugmotor betriebenen Kompressor für das Kühlen des Transportgutes im Fahrbetrieb und mit einem durch eine externe Stromversorgung betreibbaren weiteren Kühlkompressor für den Standbetrieb ausgestattet ist. Die externe Netzspannung lädt zu gegebener Zeit über ein Batterieladegerät eine in dem Fahrzeug vorgesehene Pufferbatterie, die dazu dient, zumindest ein Kühlluftumluftgebläse und ein Kondensatorlüftungsgebläse bei stehendem Fahrzeugmotor mit Bordspannung zu versorgen. Dadurch wird zusätzliche Energie für den Standbetrieb bereit gestellt, die zumindest für ein Halten der Kühlraumtemperatur bei fehlender externer Spannungsversorgung geeignet ist. Es werden also die auch bei guter Kühlraumisolation unvermeidlichen Kälteverluste ausgeglichen. Das Batterieladegerät und die Pufferbatterie benötigen allerdings einigen Platz im Fahrzeug und verursachen höhere Anschaffungs- und Installationskosten. Derartige Kühlguttransporter erfordern einigen Montageaufwand, da die Komponenten der Kühlmittelkreisläufe an sehr unterschiedlichen Orten installiert werden müssen.

Eine Weiterentwicklung der vorgenannten Standkühlung für Frischdienst-Fahrzeuge gemäß DE 20 2006 009 803 U1 sieht vor, die Fahrgastraumklimatisierung und die Transportraumkühlung eines Frischdienst-Fahrzeuges in ein Gesamt-Kühlsystem mit getrennten Kältemittelverdampfern zu integrieren, welches von zwei getrennten Kältemittelkompressoren mit nachgeschalteten luftgekühlten Kondensatoren betrieben wird. Der erste Kältemittelkompressor wird vom Fahrzeugmotor angetrieben und samt zugehörigem Kondensator im Motorraum des Fahrzeuges angeordnet. Der zweite Kältemittelkompressor wird mit externer Netzspannung durch einen Elektromotor angetrieben und ist, wie schon gemäß DE 298 16 787 U1, außerhalb des Transportgutkühlraumes aber innerhalb des Fahrzeuges angeordnet. Der dem elektrisch betriebenen zweiten Kältemittelkompressor zugeordnete luftgekühlte Kältemittelkondensator ist außerhalb des Motorraumes in einer mit der Außenluft in Verbindung stehenden Stelle unter der Bodengruppe des Fahrzeugs angeordnet. Durch diese Maßnahmen wird die Kühlung im Standbetrieb verbessert. Wie schon gemäß DE 298 16 787 U1 sind die verschiedenen Komponenten dieser komplexen Kühlanordnung verstreut im Fahrzeug anzuordnen. Dokumente EP 0 958 952 A1 und US 3 759 321 zeigen Kühlmittelverflüssiger-Einheiten in Kombination mit elektrisch angetriebenen Kühlmittelkompressoren.

Um dem Mangel der aufwändigen Installation bekannter Kühlsysteme für Frischdienstfahrzeuge entgegenzuwirken, ist man dazu übergegangen, gewisse Komponentengruppen als bauliche Einheiten zusammenzufassen. So wurde eine Kühlmittelverflüssiger-Einheit als Aufdach montierbare Kompakteinheit am Markt angeboten, bei der ein elektrisch mit Bordspannung betriebener Kühlmittelkompressor zur Verringerung der Bauhöhe und damit Verringerung des Luftwiderstandes in horizontaler Lage an einem Geräteträger befestigt wurde. Derselbe Geräteträger nimmt auch einen luftgekühlten Kondensator auf, der bei fehlendem Fahrtwind durch ein flach gestaltetes Kühlgebläse mit Kühlluft versorgt wird. Bei diesen bekannten Kühlmittelverflüssiger-Einheiten, von denen die Erfindung ausgeht, wird eine relativ große Grundfläche benötigt, die aber wegen der Aufdachmontage keinen Nachteil darstellt.

### DARSTELLUNG DER ERFINDUNG

Davon ausgehend liegt der Erfindung die Aufgabe zugrunde, eine gattungsgemäße Kühlmittelverflüssiger-Einheit vorzuschlagen, die für ausreichende Kühlung, wie des Kühlguts in einem kompakten Kühlguttransporter, d. h. mit ausreichenden Kühlleistung versehbar für die rauen Umgebungsverhältnisse einer Außen- und insbesondere einer Unterbodenanbringung geeignet ist. Zur Lösung dieser Aufgabe wird eine Kühlmittelverflüssiger-Einheit mit den Merkmalen des Anspruchs 1 vorgeschlagen. Demnach ist bei einer Ausführungsform einer Kühlmittelverflüssiger-Einheit vorgesehen, dass der Wärmeaustauscher mantelförmig gestaltet ist und offene Stirnenden und einen Innenraum aufweist. Mindestens eine Komponente der Kühl- oder Klimatisierungsvorrichtung, vorzugsweise des Kühlmittelkreislaufes, wie z.B. ein mit Bordspannung betriebener Kühlmittelkompressor, ist in dem von der Mantelform gebildeten Innenraum, insbesondere liegend, aufgenommen.

Mantelförmige, quer durchströmbare Wärmeaustauscher an sich sind aus verschiedenen Bereichen der Technik bekannt, und zwar auch für luftgekühlte Verflüssiger von Kühlanlagen, wie z.B. aus der EP 1 256 770 B1 und der DE 20 2005 000 560 U1 bekannt. Gemäß der EP 1 256 770 B1 bilden die radialen Außenkanten der zu den Kühlmittelrohren rechtwinklig angeordneten und diese umgreifenden Kühlrippen eine teilzylindrische Mantelfläche eines ansonsten von geschlossenen Wänden gebildeten Gehäuses. Die Gehäusewände können zur Aufnahme von Ventilatoren an einigen Stellen durchbrochen sein, um einen nach außen zwischen den Kühlrippen verlaufenden Luftstrom zu ermöglichen. Demgegenüber ist aus der DE 20 2005 000 560 U1 ein teilkreismantelförmiger Kondensator für dachmontierte Klimaanlagen von Wohnmobilen bekannt, bei denen auf der unteren Außenseite einer geschlossenen Stirnwand ein Elektromotor befestigt ist, dessen Antriebswelle für ein Axiallüfterrad die Stirnwand im Zentrum durchdringt, während die gegenüberliegende Stirnwand als Abströmfläche für Kühlluft dient, die das Lüfterrad von radial außen durch den mantelförmigen Kondensator ansaugt.

Gegenüber diesem Stand der Technik verwirklicht die Erfindung eine neuartige, insbesondere für Transportgutkühlung in kompakten Transportfahrzeugen mit vom Fahrzeugmotor unabhängiger Kühlmittelverdichtung und zur Unterflurmontage geeignete Kühlmittelverflüssiger-Einheit gemäß Anspruch 1. Gemäß der Erfindung kann sowohl ein die Fahrzeughöhe erhöhender Dachaufbau als auch ein zusätzlicher Platzbedarf im Motorraum entfallen. Gleichzeitig entsteht eine fertig montierte und einfach einzubauende Kompakteinheit, die selbst in einer Reserveradmulde des Unterbodens Platz findet und gegen die rauen Umweltbelastungen aufgrund von Steinschlag, Schmutz, Feuchtigkeit, Streusalzen und dergleichen geschützt ist. Abhängend von der Betriebsart kann die Kühlmittelverflüssiger-Einheit im weitesten Sinne zum Temperieren des Transportgutes, aber auch für Klimatisierungszwecke benutzt werden, und z.B. zwischen Kühl- und Wärmepumpen-Betrieb auch umschaltbar sein. Dabei bedeutet im Sinne der Erfindung eine "mantelförmige Gestaltung des Wärmeaustauschers", dass sich die Wärmeaustauschflächen um einen von ihnen gebildeten Innenraum herum erstrecken und die Stirnflächen dieser Mantelform von Wärmeaustauschflächen im Wesentlichen frei sind. Die Grundfläche kann vieleckig, kreisförmig oder auch teilkreisförmig sein. Der Mantel ist erfindungsgemäß vollständig umlaufend. Teilbereiche des Mantels können auch frei von Wärmeaustauschflächen sein.

Die Erfindung kann nun auf verschiedene Weise ausgeführt werden:
Um die Außenflächen des mantelförmigen Wärmeaustauschers vor Witterungseinflüssen und/oder Steinschlag zu schützen, und/oder um die Wirkung der quer zur Mantelfläche den Wärmeaustauscher durchdringenden Kühlluft zu verbessern, können an mindestens einem der die Stirnenden des mantelförmigen Wärmetauschers verschließenden Elemente vorgesehen sein, die an ihrem oder im Bereich ihres äußeren Randes mindestens eine umlaufende Schürze tragen.

Das Kühlluftgebläse des Wärmeaustauschers wird, bei einer ersten Ausführungsform der Erfindung, an dem einen, vorzugsweise oberen, von der Mantelform des Wärmetauschers gebildeten stirnseitigen offenen Enden vorgesehen. Wenn das Gebläse in zentraler Anordnung vorgesehen ist, so kann dadurch ein großer Anström- oder Abströmquerschnitt ohne Vergrößerung des Bauvolumens der Kühlmittelverflüssiger-Einheit erreicht werden. Bevorzugter Weise kann ein Ringelement vorgesehen sein, das den Wärmeaustauscher stirnseitig überdeckt. Im Bereich der Ringöffnung, vorzugsweise oberhalb derselben kann ein Gebläsemotor angeordnet sein, der den Rotor / das Flügelrad des Gebläses, vorzugsweise direkt, antreibt. Grundsätzlich kann dieses Ringelement Hauptbestandteil des Geräteträgers sein und den Kühlmittelkompressor hängend tragen. Dadurch ist unter anderem eine hängende Unterbodenmontage auf besonders einfache Weise möglich. Alternativ kann das Ringelement auch als Bestandteil des Geräteträgers ausgeführt oder auch unabhängig vom Geräteträger sein.

Wenn das, bevorzugt unten gelegene, zweite Stirnende des mantelförmigen Wärmeaustauschers mit einem Panzerungselement verschlossen ist, kann dadurch nicht nur Steinschlag sondern können auch schädliche Witterungseinflüsse von der Kühlmittelverflüssiger-Einheit und insbesondere von dem Wärmeaustauscher weitgehend ferngehalten werden. Hierzu kann auch eine strömungsgünstige Formgebung des Panzerungselementes beitragen. Als Panzerungselement im Sinne der Erfindung ist jedes ein Stirnende des mantelförmigen Wärmeaustauschers verschließendes Element, wie auch eine Gehäusewand, das den rauen Unterbodenbeanspruchungen eines Transportfahrzeuges entspricht. So ist es auch möglich hierfür einen dem Bodenblech des Fahrzeugs entsprechenden Aufbau einschließlich Korrosionsschutz zu wählen.

Das das unten gelegene Stirnende des mantelförmigen Wärmeaustauschers verschließende Element dient bei einer bevorzugten Ausführungsform der Erfindung als Geräteträger für den Kühlmittelkompressor. Es kann gleichzeitig als Geräteträger für Wärmeaustauscher, das Gebläse und ggf. weitere Komponenten dienen und gewünschten Falls das obere Verschlusselement des mantelförmigen Wärmeaustauschers tragen oder mit diesem in einer Weise verbunden sein, dass beide Verschlusselemente gemeinsam als Geräteträger dienen. Alternativ oder kumulativ kann das untere Verschlusselement oder ein unten gelegener Geräteträger mit dem Fahrzeug tragend verbunden sein.

Wenn zusammen mit einem Kühlmittelkompressor oder auch ohne denselben ein Kältemitteltrockner, ein Kältemittelspeicher und/oder elektronische Bauteile, wie ein Inverter zur Drehzahlsteuerung des Verdichters, an dem Geräteträger innerhalb des Innenraums des mantelförmigen Wärmeaustauschers angeordnet sind, wird dadurch die Kompaktheit und einfache Montage der Kühlvorrichtung am Kühlguttransporter verbessert. Es ist auch möglich, den Platz zwischen den Stirnhälften eines nicht vollständig den Innenraum umlaufenden Wärmeaustauschers zur Unterbringung des Kühlmittelkompressors zu nutzen.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung und der zugehörigen Zeichnungen, in der - beispielhaft - ein Ausführungsbeispiel einer Kühlmittelverflüssiger-Einheit dargestellt ist.

### KURZBESCHREIBUNG DER FIGUREN

In der Zeichnung zeigen
- Fig. 1: eine Kühlmittelverflüssiger-Einheit in perspektivischer Außenansicht von schräg oben;
- Fig. 2: dieselbe Kühlmittelverflüssiger-Einheit im Axialschnitt (Schnitt entlang der Linie II-II gemäß Fig. 1);
- Fig. 3: eine zweite, nicht erfindungsgemäße Ausführungsform einer Kühlmittelverflüssiger-Einheit in Ansicht von oben;
- Fig. 4: dieselbe Kühlmittelverflüssiger-Einheit im Axialschnitt (Schnitt entlang der Linie IV-IV gemäß Fig. 3), sowie
- Fig. 5A-D: eine erfindungsgemäße Ausführungsform einer Kühlmittelverflüssiger-Einheit.

### DETAILLIERTE BESCHREIBUNG VON AUSFÜHRUNGSBEISPIELEN

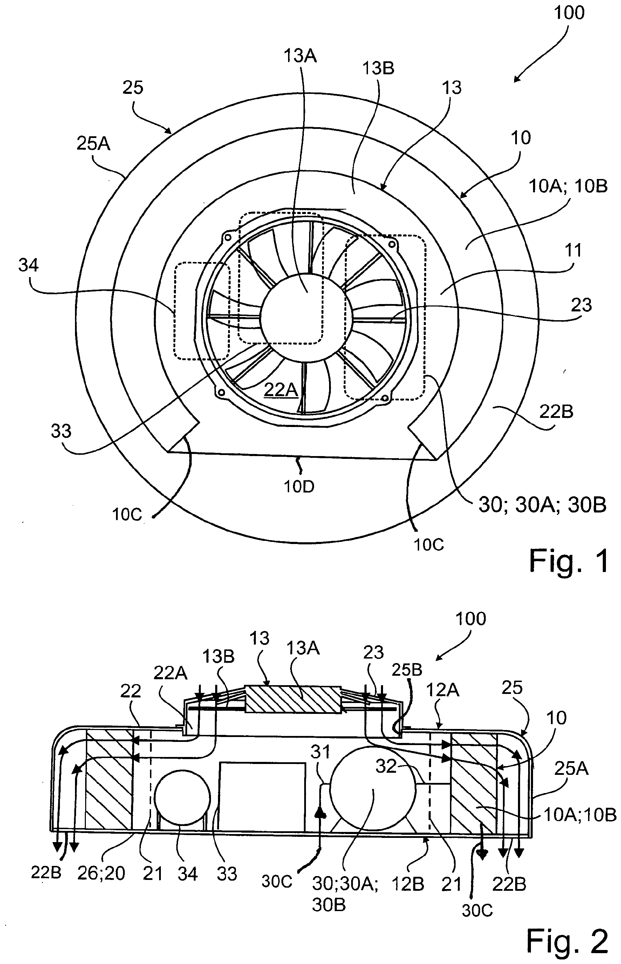

Aus Figuren 1 und 2 ist eine Kühlmittelverflüssiger-Einheit 100 für die Unterflurmontage in der Reserveradmulde eines Kühlguttransporters ersichtlich, bei der ein an sich bekannter teilkreiszylindrischer, querdurchströmbarer Kondensator (Wärmeaustauscher 10) aufgrund seiner Mantelform einen Innenraum 11 und offene Stirnenden 12A, 12B bildet, wobei die Mantelform dadurch einen vollständigen Umfang erhält, dass die umfangsmäßigen Stirnenden 10C des Wärmeaustauschers 10 durch eine Ergänzungswand 10D verbunden sind. Ein insgesamt mit 20 bezeichneter Geräteträger besteht bei dem dargestellten und in soweit bevorzugtem Ausführungsbeispiel aus einer stabilen Bodenplatte, die das unten gelegene Stirnende 12B des mantelförmigen Wärmeaustauschers 10 verschließt und auf seiner Unterseite als Panzerungselement 26 gegen Steinschlag und dergleichen sowie gleichzeitig als Bestandteil eines Gehäuses 25 dient.

Auf dem Geräteträger 20 ist in liegender Anordnung ein mit Bordstrom (12V/24V/220V) betriebener Kühlmittelkompressor 30 in außermittiger Anordnung befestigt, bei der die liegend orientierte Antriebswelle des integrierten elektrischen Antriebsmotors 30A den liegend angeordneten Verdichter 30B antreibt. Der Kompressoreingang 31 (Fig. 2) ist für den Anschluss an eine gesondert untergebrachte und hier nicht dargestellte Verdampfereinheit niederdruckseitig anschließbar. Der Kompressorausgang 32 ist fluidisch mit den umlaufenden Kühlschlagen 10A des Wärmeaustauschers 10 verbunden, deren entfernte Enden wiederum einen Anschluss zur Verbindung mit der Flüssigseite des gesondert untergebrachten (und nicht dargestellten) Kältemittelverdampfers aufweist. Es sind entsprechend Anschlüsse 30C für Kühlmittelleitungen vorgesehen. Die die Kühlschlangen 10A umgebenden (nicht dargestellten) Kühlrippen sind in an sich bekannter Weise im Wesentlichen radial ausgerichtet. Sie können beschichtet sein, z.B. mit Nanopartikeln, um die Luftströmung und/oder die Kühlungsmöglichkeit zu verbessern.

Aus Figuren 1 und 2 ist ferner ersichtlich, dass ein elektronisches Bauteil, wie ein wärmeerzeugender Inverter 33 zur Drehzahlsteuerung des Kompressors 30 sowie Sammler/Trockner 34 zur Speicherung von Kältemittel je nach Lastzustand und/oder Kältemitteltrocknung am Geräteträger 20 innerhalb des Innenraums 10, bevorzugt in liegender Anordnung, befestigt.

Ankerelemente 21 verbinden den Geräteträger 20 mit einem einen Bestandteil eines Gehäuses 25 darstellenden Ringelement 22, welches das in der Zeichnung obere Stirnende 12A des Wärmeaustauschers 10 bis auf eine offene Innenzone 22A und, im Ausführungsbeispiel ringförmig angeordnete, Ab- oder Zuluftöffnung 22B verschließt. Die Innenzone 22A wird zumindest in ihrem oberen Ende von einem großflächigen Gebläse 13 zumindest teilweise ausgefüllt, dessen elektrischer Antriebsmotor 13A von einem, insbesondere gitterartigen, Tragelement 23 etwa koaxial zum mantelförmigen Wärmeaustauscher 10 oberhalb des Ringelements 22 gehalten wird und ein großflächiges Flügelrad 13B an kurzer Welle direkt antreibt und damit insgesamt im oberen Bereich oder oberhalb des Innenraums 11 hängend angeordnet ist. Über die Ankerelemente 21 wird der Geräteträger 20 auf das Ringelement 22 ausgedehnt.

Die radiale Außenfläche des mantelförmigen Wärmeaustauschers ist mit radialem Abstand von einem einen Gehäusebereich darstellenden, den mantelförmigen Wärmetauscher 10 radial ganz umlaufend und radial geschlossen umgebenden Schürzenbereich 25A umgeben, welcher den Wärmetauscher außen vor Umwelteinflüssen schützen und/oder der Zu- oder Abluftführung dienen kann.

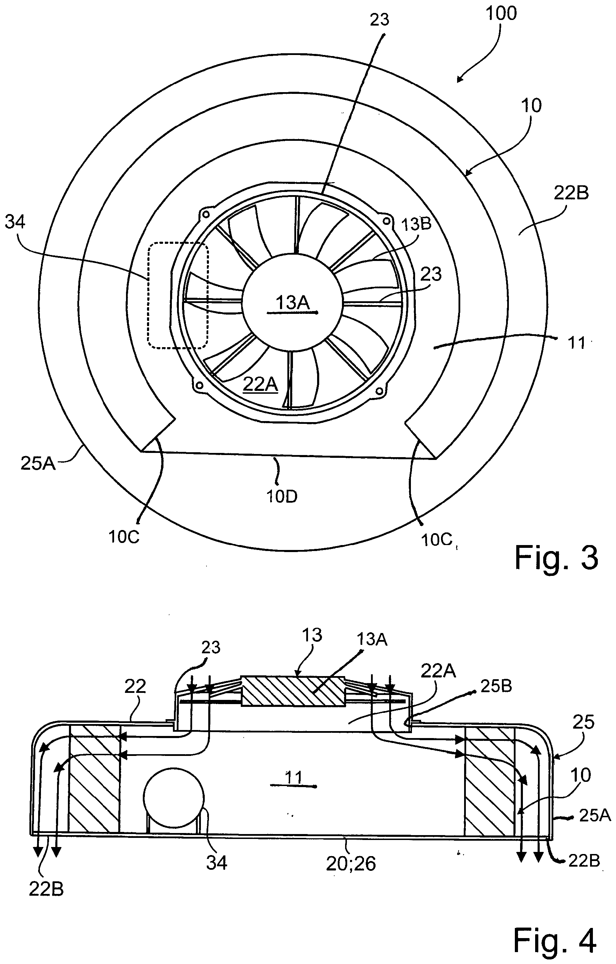

Bei der Ausführungsform nach Figuren 3 und 4 sind außer dem Sammler/Trockner 34 die übrigen Komponenten eines Kühlmittelkreislaufes, bei ansonsten gleicher Bauweise der Kühlmittelverflüssiger-Einheit wie in Figur 1 und 2, entfallen.

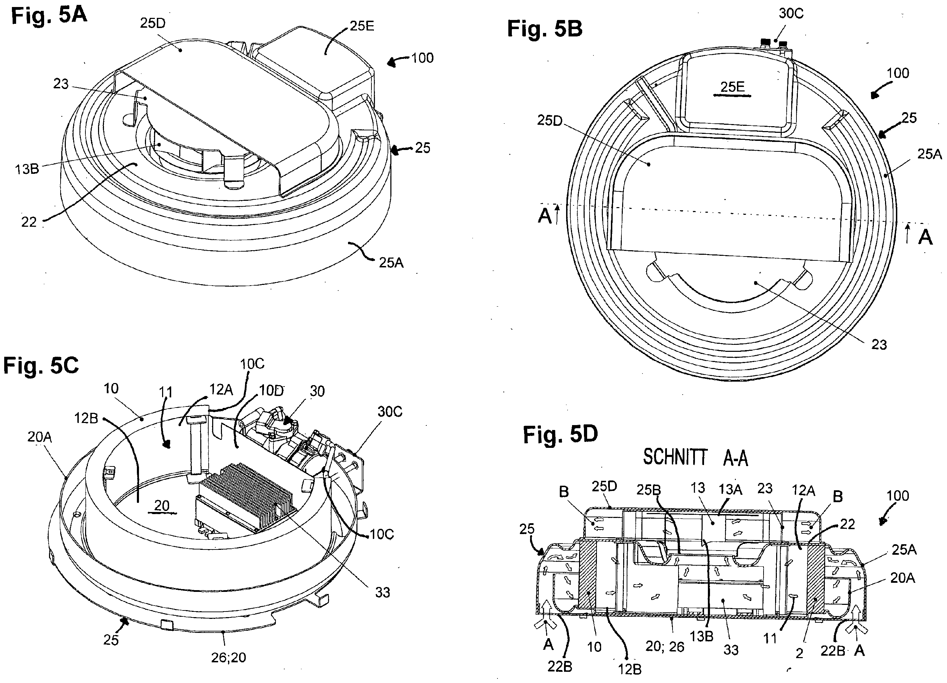

Bei der erfindungsgemäßen Ausführungsform nach Figuren 5A bis 5D ist, im Unterschied zu den vorangehenden Ausführungsformen, im Innenraum 11 lediglich ein wärmeerzeugendes Steuerteil 33 der Kühl- oder Klimatisierungsvorrichtung in Gestalt eines Inverters angeordnet. Der Kühlmittelkompressor 30 ist auf der Außenseite einer sekantenartigen Ergänzungswand 10D des Wärmeaustauschers 10 liegend angeordnet. Der Wärmeaustauscher 10 ist auf seiner radialen Außenseite mit radialem Abstand von einem radial geschlossenen Schürzenelement (20A) zumindest auf einer unteren Teilhöhe umgeben. Das Schürzenelement 20A ist nach axial unten geschlossen und mit einer Bodenfläche des Gehäuses 25 umlaufen und im Wesentlichen luftdicht verbunden, während ein oberes Schürzenelement 25A mit radialem Abstand das untere Schürzenelement 20A umgibt und stirnseitig ringartige Zuluftöffnungen 22B mit dem Schürzenelement 20A bildet. Somit wird ein Strömungslabyrinth für die Zuluft an der radialen Außenseite des Wärmetauschers 10 gebildet. Oberhalb des mit dem oberen Schürzenelement 25A umlaufend, insbesondere einstückig, verbundenen Ringelements 22 des Gehäuses 25 wird das Gebläse 13 von einem Tragelement 23, das sich am Gehäuse 25 abstützt, hängend gehalten und von einer Luftleithaube 25D abluftleitend zumindest teilweise überdeckt, die am Gehäuse 25 ansetzt. Der den Kompressor 30 aufnehmende Außenbereich des Wärmeaustauschers 10 kann mit einer bevorzugt entfernbaren Kappe abgedeckt sein, die eine Gehäuseergänzung 25E darstellt.

**BEZUGSZEICHENLISTE**

| | | | |
|---|---|---|---|
| 10 | Wärmeaustauscher | 23 | Tragelement |
| 10A | Kühlschlangen | 25 | Gehäuse |
| 10B | Kühlrippen | 25A | Schürzenelement |
| 10C | Wärmeaustauscherstirnenden | 25B | Gehäuseöffnung |
| 10D | Ergänzungswand | 25D | Luftleithaube |
| 11 | Innenraum | 25E | Ergänzungsgehäuse |
| 12A | Stirnende | 26 | Panzerungselement |
| 12B | Stirnende | 30 | Kühlmittelkompressor |
| 13 | Gebläse | 30A | elektrischer Antriebsmotor |
| 13A | Motor | 30B | Verdichter |
| 13B | Flügelrad | 30C | Anschlüsse für Kühlmittelleitung |
| 19 | Tragelement | | |
| 20 | Geräteträger | 31 | Kompressoreingang |
| 20A | Schürzenelement | 32 | Kompressorausgang |
| 21 | Ankerelemente | 33 | Steuerungsteil; Inverter |
| 22 | Ringelement | 34 | Sammler/Trockner |
| 22A | Innenzone | 100 | Kühlmittelverflüssiger-Einheit |
| 22B | Ab- oder Zuluftöffnung | | |

## Patentansprüche

1. Kühlmittelverflüssiger-Einheit (100) als gehäusegeschützter Bestandteil einer Kühl- oder Klimatisierungsvorrichtung für Transportgutkühlung in Transportfahrzeugen mit einer vom Fahrzeugmotor unabhängige Kühlmittelverdichtung und von der Kühlmittelverflüssiger-Einheit gesondert angeordneter Kühlmittelverdampfung,
- mit einem Geräteträger (20) mit mindestens einer, insbesondere in horizontaler Lage daran befestigten, Komponente eines Kühlmittelkreislaufes, insbesondere einem elektrisch angetriebenen Kühlmittelkompressor (30),
- mit einem an dem Geräteträger (20) angeordneten, als Kondensator dienenden, von Luft quer durchströmbaren Wärmeaustauscher (10),
- mit Verbindungsleitungen für flüssiges und/oder dampfförmiges Kühlmittel für einen Kühlmittelkreislauf einschließlich von Anschlussverbindern zu mindestens einem Kühlmittelverdampfer eines Kühlmittelkreislaufs,
- mit einem den Wärmeaustauscher mit Luft quer durchströmenden Gebläse (13) und
- mit einem die Kühlmittelverflüssiger-Einheit (100) auf ihrer Außenseite umschließenden Gehäuse (25),
wobei der Wärmeaustauscher (10) eine offene Stirnenden (12A, 12B) und einen Innenraum (11) bildende, Mantelform aufweist, wobei die Mantelform dadurch einen vollständigen Umfang erhält, dass die umfangsmäßigen Stirnenden (10C) des Wärmetauschers (10) durch eine Ergänzungswand (10D) verbunden sind, und
wobei der von dem mantelförmigen Wärmeaustauscher (10) gebildeten Innenraum (11) die mindestens eine, insbesondere mit Bordspannung betriebene Komponente der Kühl- oder Klimatisierungsvorrichtung, vorzugsweise eines Kühlmittelkreislaufes, aufnimmt,
**dadurch gekennzeichnet, dass**
eine oberhalb eines als Bestandteils des Gehäuses ausgebildeten Ringelementes (22) vorgesehene Luftleithaube (25D) ein Flügelrad (13B) des Gebläses (13) luftleitend überdeckt oder teilüberdeckt.

2. Kühlmittelverflüssiger-Einheit (100) nach Anspruch 1,
**dadurch gekennzeichnet, dass**
an mindestens einem der Stirnenden (12A, 12B) des mantelförmigen Wärmetauschers (10) ein Verschluss- oder Teilverschlusselement vorgesehen ist, das an seinem äußeren Rand oder im Bereich seines äußeren Randes mindestens eine den mantelförmigen Wärmetauscher (10) radial ganz umlaufende radial geschlossene Schürze oder ein Schürzenelement (25A, 20A) unter Freilassen von mindestens einer axial ausgerichteten Ab- oder Zuluftöffnung (22B) für den Wärmeaustauscher (10) trägt.

3. Kühlmittelverflüssiger-Einheit (100) nach Anspruch 1 oder 2,
**dadurch gekennzeichnet, dass**
im Bereich des einen Stirnendes (12A) des Wärmeaustauschers (10) das Gebläse (13) an einer Gehäuseöffnung (25B), des Ringelements (22) befestigt ist.

4. Kühlmittelverflüssiger-Einheit (100) nach einem der Ansprüche 1 bis 3,
**dadurch gekennzeichnet, dass**
der Wärmeaustauscher (10) mit einem sein unten gelegenes zweites Stirnende (12B) verschließenden Panzerungselement (26) versehen ist.

5. Kühlmittelverflüssiger-Einheit (100) nach einem der Ansprüche 1 bis 4,
**dadurch gekennzeichnet, dass** das Ringelement (22) als Bestandteil des Gehäuses (25) den Wärmeaustauscher (10) an mindestens einer Stirnseite überdeckt.

6. Kühlmittelverflüssiger-Einheit (100) nach Anspruch 5,
**dadurch gekennzeichnet, dass**
oberhalb einer Innenzone (22A) des Ringelementes (22) ein Gebläsemotor (13A) des Gebläses (13) hängend, insbesondere an einem Tragelement (23) angeordnet ist.

7. Kühlmittelverflüssiger-Einheit (100) nach einem der Ansprüche 1 bis 6,
**dadurch gekennzeichnet, dass** das Ringelement (22) Bestandteil, insbesondere Hauptbestandteil des Geräteträgers (20) oder des Gehäuses (25) ist und, vorzugsweise, die Kühlmittelverflüssiger-Einheit (100) und/oder einen Kühlmittekompressor (30) hängend trägt.

8. Kühlmittelverflüssiger-Einheit (100) nach einem der Ansprüche 1 bis 7,
**dadurch gekennzeichnet, dass**
ein das unten gelegene Stirnende (12B) des mantelförmigen Wärmeaustauschers (10) verschließendes Element oder Panzerungselement (26) als Geräteträger (20) für die mindestens eine Komponente eines Kühlmittelkreislaufes.

9. Kühlmittelverflüssiger-Einheit (100) nach einem der Ansprüche 1 bis 8,
**dadurch gekennzeichnet, dass**
der Geräteträger (20) als Geräteträger für den Wärmeaustauscher (10) ein oberes und/oder unteres Verschlusselement, das Gebläse, einen Kältemitteltrockner, einen Kühlmittelkompressor, einen Kältemittelspeicher und/oder elektronische Bauteile, wie einen Inverter zur Drehzahlsteuerung des Verdichters, dient und/oder das Gehäuse (25) ganz oder teilweise bildet.

10. Kühlmittelverflüssiger-Einheit (100) nach einem der Ansprüche 1 bis 9,
**dadurch gekennzeichnet, dass**
ein oberes und ein unteres Verschlusselement gemeinsam als Geräteträger (20) dienen, insbesondere, dass das untere und das obere Verschlusselement durch Ankerelemente (21) verbunden sind.

11. Kühlmittelverflüssiger-Einheit (100) nach einem der Ansprüche 1 bis 10,
**dadurch gekennzeichnet, dass**
die Kühlmittelverflüssiger-Einheit (100) eine zylindrische Außenkontur aufweist.

12. Kühlmittelverflüssiger-Einheit (100) nach einem der Ansprüche 1 bis 11,
**dadurch gekennzeichnet, dass**
die Kühlmittelverflüssiger-Einheit (100) eine kreisrunde Grundfläche aufweist.

13. Kühlmittelverflüssiger-Einheit (100) nach einem der Ansprüche 1 bis 12,
**dadurch gekennzeichnet, dass**
der Wärmeaustauscher (10) auf seiner radialen Außenseite mit radialem Abstand von einem radial geschlossenen Schürzenelement (20A) zumindest auf einer unteren Teilhöhe umgeben und das Schürzenelement (20A) nach axial unten geschlossen ist.

## Claims

1. Coolant condenser unit (100) as a housing-protected component of a cooling or air-conditioning device for cooling goods to be transported in transport vehicles with a coolant compression independent of the vehicle engine and coolant evaporation arranged separately from the coolant condenser unit,
- with an device support (20) with at least one component of a coolant circuit, in particular an electrically driven coolant compressor (30), fastened thereto, in particular in a horizontal position,
- with a heat exchanger (10) disposed on the device support (20), serving as a condenser and through which air can flow transversely,
- with connecting lines for liquid coolant and/or vapour coolant for a coolant circuit including connectors to at least one coolant evaporator of a coolant circuit,
- with a fan (13) which delivers air transverse through the heat exchanger and
- with a housing (25) enclosing the coolant condenser unit (100) on its outside,
wherein the heat exchanger (10) has an envelope shape forming open end faces (12A, 12B) and an interior (11), the envelope shape being given a complete circumference by connecting the circumferential end faces (10C) of the heat exchanger (10) by a supplementary wall (10D), and
wherein the interior (11) formed by the envelope-shapes heat exchanger (10) accommodates the at least one component of the cooling or air-conditioning device, preferably a coolant circuit, in particular one operated with on-board voltage,
**characterized in that**
an air guide bonnet (25D) provided above a ring element (22) formed as a component of the housing covers or partially covers an impeller (13B) of the fan (13) in an air-guiding manner.

2. Coolant condenser unit (100) according to claim 1,
**characterized in that**
a closure or partial closure element is provided at at least one of the end faces (12A, 12B) of the envelope-shaped heat exchanger (10), which carries at its outer edge or in the region of its outer edge at least one radially closed apron or apron element (25A, 20A) which completely radially surrounds the envelope-shaped heat exchanger (10), leaving free at least one axially aligned exhaust or supply air opening (22B) for the heat exchanger (10).

3. Coolant condenser unit (100) according to claim 1 or 2,
**characterized in that**
in the region of one end face (12A) of the heat exchanger (10), the fan (13) is fixed to a housing opening (25B) of the ring element (22).

4. Coolant condenser unit (100) according to one of claims 1 to 3,
**characterized in that**
the heat exchanger (10) is provided with an armouring element (26) closing its lower second end face (12B).

5. Coolant condenser unit (100) according to one of claims 1 to 4,
**characterized in that**
the ring element (22) as a component of the housing (25) covers the heat exchanger (10) on at least one end face.

6. Coolant condenser unit (100) according to claim 5,
**characterized in that**
above an inner zone (22A) of the ring element (22), a fan motor (13A) of the fan (13) is suspended, in particular on a support element (23).

7. Coolant condenser unit (100) according to one of claims 1 to 6,
**characterized in that**
the ring element (22) is a component, in particular a main component of the device support (20) or of the housing (25) and, preferably, supports the coolant condenser unit (100) and/or a coolant compressor (30) in a suspended manner.

8. Coolant condenser unit (100) according to one of claims 1 to 7,
**characterized in that**
an element or armouring element (26) closing the lower end face (12B) of the envelope-shaped heat exchanger (10) is a device support (20) for the at least one component of a coolant circuit.

9. Coolant condenser unit (100) according to one of claims 1 to 8,
**characterized in that**
the device support (20) serves as the device support for the heat exchanger (10) an upper and/or lower closure element, the fan, a refrigerant dryer, a refrigerant compressor, a refrigerant storage tank and/or electronic components, such as an inverter for controlling the speed of the compressor, and/or forms the housing (25) completely or partially.

10. Coolant condenser unit (100) according to one of claims 1 to 9,
**characterized in that**
an upper and a lower closure element jointly serve as the device support (20), in particular that the lower and the upper closure element are connected by anchor elements (21).

11. Coolant condenser unit (100) according to one of the claims 1 to 10,
**characterized in that**
the coolant condenser unit (100) has a cylindrical outer contour.

12. Coolant condenser unit (100) according to one of claims 1 to 11,
**characterized in that**
the coolant condenser unit (100) has a circular base area.

13. Coolant condenser unit (100) according to one of claims 1 to 12,
**characterized in that**
the heat exchanger (10) is surrounded on its radial outer side at a radial distance by a radially closed apron element (20A) at least at a lower partial height and the apron element (20A) is closed axially downwards.

## Revendications

1. Unité condenseur (100) de fluide réfrigérant en tant que composant, protégé par un boîtier, d'un dispositif de réfrigération ou climatisation pour la réfrigération de marchandises pendant le transport dans des véhicules de transport, comportant un dispositif de compression du fluide réfrigérant indépendant du moteur du véhicule et un évaporateur du fluide réfrigérant disposé séparément de ladite unité condenseur de fluide réfrigérant, comprenant
un support d'appareillage (20) comprenant au moins un composant, en particulier fixé sur celui-ci en position horizontale, d'un circuit de fluide réfrigérant, en particulier un compresseur (30) de fluide réfrigérant à entraînement électrique,
un échangeur de chaleur (10) qui est disposé sur le support d'appareillage (20), sert de condenseur, et permet un passage transversal d'air,
des conduits de connexion pour fluide réfrigérant liquide ou sous forme de vapeur pour un circuit de fluide réfrigérant, et y compris des raccords de connexion à au moins un évaporateur de fluide réfrigérant d'un circuit de fluide réfrigérant,
un ventilateur (13) provocant un passage transversal d'air à travers ledit échangeur de chaleur et
un boîtier (25) renfermant ladite unité condenseur (100) de fluide réfrigérant sur son extérieur, ledit échangeur de chaleur (10) se présentant sous forme d'une gaine formant des extrémités frontales (12A, 12B) ouvertes et un intérieur (11), la forme de la gaine devenant un pourtour complet par le fait que les extrémités frontales du pourtour (10C) de l'échangeur de chaleur (10) sont reliées par une paroi complémentaire (10D), et
ledit intérieur (11) formé par ledit échangeur de chaleur (10) en forme de gaine recevant ledit au moins un composant, qui est en particulier alimenté par tension de bord, du dispositif de réfrigération ou climatisation, de préférence d'un circuit de fluide réfrigérant,
**caractérisée en ce que**
un capot (25D) de guidage d'air, qui est prévu au-dessus d'un élément annulaire (22) faisant partie du boîtier, couvre une roue hélice (13B) du ventilateur (13) ou couvre celle-ci en partie, de façon à guider l'air.

2. Unité condenseur (100) de fluide réfrigérant selon la revendication 1,
**caractérisée en ce que**
sur au moins une des extrémités frontales (12A, 12B) dudit échangeur de chaleur (10) en forme de gaine un élément de fermeture ou de fermeture partielle est prévu qui porte, sur son bord extérieur ou dans la région de son bord extérieur, une jupe, ou un élément de jupe (25A, 20A), qui est radialement fermée et qui entièrement entoure radialement ledit échangeur de chaleur (10) en forme de gaine, en laissant libre au moins une ouverture (22B), qui est orientée en direction axiale, de sortie ou d'entrée d'air pour ledit échangeur de chaleur (10).

3. Unité condenseur (100) de fluide réfrigérant selon la revendication 1 ou 2,
**caractérisée en ce que**
dans la région de l'une des extrémités frontales (12A) de l'échangeur de chaleur (10) ledit ventilateur (13) est fixé à une ouverture (25B) du boîtier dudit élément annulaire (22).

4. Unité condenseur (100) de fluide réfrigérant selon l'une quelconque des revendications 1 à 3,
**caractérisée en ce que**
ledit échangeur de chaleur (10) est pourvu d'un élément de blindage (26) fermant la deuxième, située en bas, de ses extrémités frontales (12B).

5. Unité condenseur (100) de fluide réfrigérant selon l'une quelconque des revendications 1 à 4,
**caractérisée en ce que**
ledit élément annulaire (22), qui fait partie du boîtier (25), couvre ledit échangeur de chaleur (10) sur au moins une des extrémités frontales.

6. Unité condenseur (100) de fluide réfrigérant selon la revendication 5,
**caractérisée en ce que**
au-dessus d'une région centrale (22A) dudit élément annulaire (22) un moteur (13A) dudit ventilateur (13) est suspendu, en particulier sur un élément de support (23).

7. Unité condenseur (100) de fluide réfrigérant selon l'une quelconque des revendications 1 à 6,
**caractérisée en ce que**
ledit élément annulaire (22) fait partie, et en particulier est un composant principal, du support d'appareillage (20) ou du boîtier (25), et de préférence porte de façon suspendue ladite unité condenseur (100) de fluide réfrigérant et/ou un compresseur (30) de fluide réfrigérant.

8. Unité condenseur (100) de fluide réfrigérant selon l'une quelconque des revendications 1 à 7,
**caractérisée en ce que**
un élément ou élément de blindage (26), qui ferme l'une (12B), située en bas, des extrémités frontales dudit échangeur de chaleur (10) en forme de gaine, sert de support d'appareillage (20) pour ledit au moins un composant d'un circuit de fluide réfrigérant.

9. Unité condenseur (100) de fluide réfrigérant selon l'une quelconque des revendications 1 à 8,
**caractérisée en ce que**
ledit support d'appareillage (20) sert de support d'appareillage pour ledit échangeur de chaleur (10), un élément de fermeture supérieur et/ou inférieur, ledit ventilateur, un dessiccateur de fluide réfrigérant, un compresseur de fluide réfrigérant, un réservoir de fluide réfrigérant et/ou des composants électroniques, tel qu'un convertisseur pour régler la vitesse du compresseur, et/ou constitue le boîtier entièrement ou en partie.

10. Unité condenseur (100) de fluide réfrigérant selon l'une quelconque des revendications 1 à 9,
**caractérisée en ce que**
des éléments de fermeture supérieur et inférieur servent conjointement de support d'appareillage (20), et en particulier **en ce que** lesdits éléments de fermeture inférieur et supérieur sont reliés par des éléments d'ancrage (21).

11. Unité condenseur (100) de fluide réfrigérant selon l'une quelconque des revendications 1 à 10,
**caractérisée en ce que**
ladite unité condenseur (100) de fluide présente un contour extérieur cylindrique.

12. Unité condenseur (100) de fluide réfrigérant selon l'une quelconque des revendications 1 à 11,
**caractérisée en ce que**
ladite unité condenseur (100) de fluide présente une surface de base circulaire.

13. Unité condenseur (100) de fluide réfrigérant selon l'une quelconque des revendications 1 à 12,
**caractérisée en ce que**
ledit échangeur de chaleur (10) est entouré, à distance radiale, sur son extérieur radial par un élément de jupe (20A) qui est radialement fermé au moins sur une partie inférieure de la hauteur et ledit élément de jupe (20A) est fermé axialement vers le bas.
